(19) Europäisches Patentamt / European Patent Office / Office européen des brevets

(11) **EP 3 960 509 B1**

## (12) EUROPEAN PATENT SPECIFICATION

(45) Date of publication and mention
of the grant of the patent:
**19.07.2023 Bulletin 2023/29**

(21) Application number: **21192210.9**

(22) Date of filing: **19.08.2021**

(51) International Patent Classification (IPC):
**B60H 1/00** *(2006.01)*        **B61D 27/00** *(2006.01)*

(52) Cooperative Patent Classification (CPC):
**B60H 1/00785; B61D 27/0018;** B60H 1/00371;
B60H 1/00828

(54) **VEHICLE CONDENSATION DETECTION DEVICE, VEHICLE AIR CONDITIONING APPARATUS, AND VEHICLE CONDENSATION DETECTION METHOD**

VORRICHTUNG ZUR ERKENNUNG VON FAHRZEUGKONDENSATION, FAHRZEUGKLIMAANLAGE UND VERFAHREN ZUR ERKENNUNG VON FAHRZEUGKONDENSATION

DISPOSITIF DE DÉTECTION DE CONDENSATION DANS UN VÉHICULE, APPAREIL DE CLIMATISATION DE VÉHICULE ET PROCÉDÉ DE DÉTECTION DE CONDENSATION DANS UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2020 JP 2020143266**

(43) Date of publication of application:
**02.03.2022 Bulletin 2022/09**

(73) Proprietor: **MITSUBISHI ELECTRIC CORPORATION**
**Chiyoda-ku**
**Tokyo 100-8310 (JP)**

(72) Inventor: **SUZUKI, Tomoya**
**Tokyo, 100-8310 (JP)**

(74) Representative: **Studio Torta S.p.A.**
**Via Viotti, 9**
**10121 Torino (IT)**

(56) References cited:
EP-A1- 1 080 955            EP-A1- 3 275 706
DE-A1- 3 836 559            DE-A1- 19 540 566
DE-A1-102015 113 574

## Description

## FIELD

The present invention relates to a vehicle condensation detection device, a vehicle air conditioning apparatus, and a vehicle condensation detection method.

## BACKGROUND

As disclosed in JP H01-297318, a vehicle air conditioning apparatus is known that detects a possibility that condensation occurs on an inside surface of a glass window of a vehicle. This vehicle air conditioning apparatus determines, depending on whether a detection value detected by an outside air temperature sensor arranged outside of a vehicle and near a glass window is lower than or equal to a dew point of air of a vehicle compartment, whether condensation may possibly occur on an inside surface of the glass window.

Although the aforementioned vehicle air conditioning apparatus need not directly measure a temperature on the inside surface of the glass window, the detection value detected by the outside air temperature sensor itself does not necessarily represent the temperature on the inside surface of the glass window. Saying that the aforementioned vehicle air conditioning apparatus enables accurate detection of existence of a possibility that condensation occurs on the inside surface of the glass window is therefore difficult.

Furthermore, condensation may possibly occur at a portion other than the glass window of the vehicle compartment, on an inside surface of the portion. Therefore, a technique is desirable that enables accurate detection of existence of a state in which condensation can occur on an inside surface of the vehicle compartment that includes the inside surface of the glass window.

DE-A1-102015113574, EP-A1-1080955 and DE-A1-19540566 disclose a vehicle condensation detection device according to the preamble of claim 1.

An objective of the present invention is to provide a vehicle condensation detection device, a vehicle air conditioning apparatus, and a vehicle condensation detection method that enable more accurate detection of, than conventional techniques, the existence of the state in which condensation can occur on the inside surface of a compartment of a vehicle.

## SUMMARY

To achieve the aforementioned objective, a vehicle condensation detection device according to the present invention includes:

a vehicle-inside humidity specifier to specify vehicle-inside humidity that is humidity in a compartment of a vehicle;
a vehicle-inside temperature specifier to specify a vehicle-inside temperature that is a temperature in the compartment;
a vehicle-outside temperature specifier to specify a vehicle-outside temperature that is a temperature outside of the vehicle;
a vehicle-inside wind velocity specifier to specify a vehicle-inside wind velocity that is a wind velocity of airflow formed in the compartment by an air conditioner for air conditioning of the compartment;
a condensation determiner to make, using values of the vehicle-inside humidity specified by the vehicle-inside humidity specifier, the vehicle-inside temperature specified by the vehicle-inside temperature specifier, the vehicle-outside temperature specified by the vehicle-outside temperature specifier, and the vehicle-inside wind velocity specified by the vehicle-inside wind velocity specifier, a condensation determination that is a determination on whether a state exists in which condensation can occur on an inside surface of the compartment; and
a determination result outputter to output a determination result that is a result of the determination by the condensation determiner;
the condensation determiner includes, in turn:

a dew-point calculator to calculate, using the vehicle-inside humidity specified by the vehicle-inside humidity specifier and the vehicle-inside temperature specified by the vehicle-inside temperature specifier, a dew point of vehicle-inside air that is air inside the compartment;
an inside-surface attainable temperature calculator to (i) calculate, using the vehicle-inside wind velocity specified by the vehicle-inside wind velocity specifier, a vehicle-inside thermal resistance that represents a thermal resistance of the vehicle-inside air and is dependent on the vehicle-inside wind velocity so as to decrease with increase in the vehicle-inside wind velocity, (ii) calculate, using the vehicle-inside temperature specified by the vehicle-inside temperature specifier and the vehicle-outside temperature specified by the vehicle-outside temperature specifier, a temperature difference that is a difference between the vehicle-inside temperature and the vehicle-outside temperature, and (iii) calculate, using the vehicle-inside thermal resistance and the temperature difference, an inside-surface attainable temperature representing an attainable temperature on the inside surface of the compartment; and
a comparer to determine whether the inside-surface attainable temperature calculated by the inside-surface attainable temperature calculator is lower than or equal to the dew point calculated by the dew-point calculator.

## ADVANTAGEOUS EFFECTS OF INVENTION

The vehicle condensation detection device according to the present invention enables, especially by using the value of the vehicle-inside wind velocity to make the condensation determination, more accurate detection of, than conventional techniques, the existence of the state in which condensation can occur on the inside surface of the compartment of the vehicle.

## BRIEF DESCRIPTION OF THE DRAWINGS

A more complete understanding of this invention can be obtained when the following detailed description is considered in conjunction with the following drawings, in which:

FIG. 1 is a schematic diagram illustrating configuration of a vehicle air conditioning apparatus according to Embodiment 1;
FIG. 2 is a schematic diagram illustrating configuration of an air conditioner according to Embodiment 1;
FIG. 3 is a schematic diagram illustrating functions of a control device according to Embodiment 1;
FIG. 4 is a flowchart of condensation monitor processing according to Embodiment 1;
FIG. 5 is a schematic diagram illustrating a vehicle-inside wind velocity specifier and a vehicle-inside humidity specifier according to Embodiment 2;
FIG. 6 is a schematic diagram illustrating a vehicle-outside temperature specifier according to Embodiment 3;
FIG. 7 is a schematic diagram illustrating a vehicle-outside wind velocity specifier according to Embodiment 4;
FIG. 8 is a schematic diagram illustrating stirring airflow formed by a stirring fan according to Embodiment 5; and
FIG. 9 is a schematic diagram illustrating a determination result outputter according to Embodiment 6.

## DETAILED DESCRIPTION

Hereinafter, embodiments of a vehicle air conditioning apparatus according to the present invention, in which the vehicle is a railroad vehicle, are described with reference to the drawings. In the drawings, components that are the same or equivalent are assigned the same reference sign.

Embodiment 1

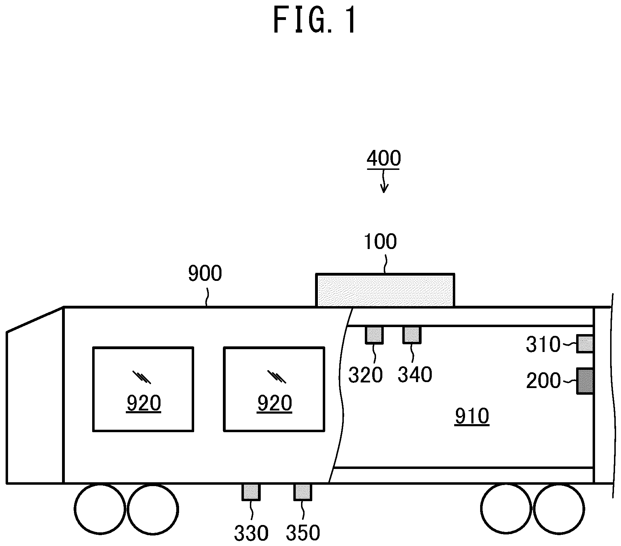

As illustrated in FIG. 1, a vehicle air conditioning apparatus 400 according to the present embodiment is installed in a railroad vehicle 900. The vehicle air conditioning apparatus 400 includes an air conditioner 100 that performs air conditioning of a compartment 910 that is defined in the railroad vehicle 900 for human occupancy, and a control device 200 that controls the air conditioner 100. The compartment 910 is, to be more precise, a vehicle compartment for occupation by the passengers.

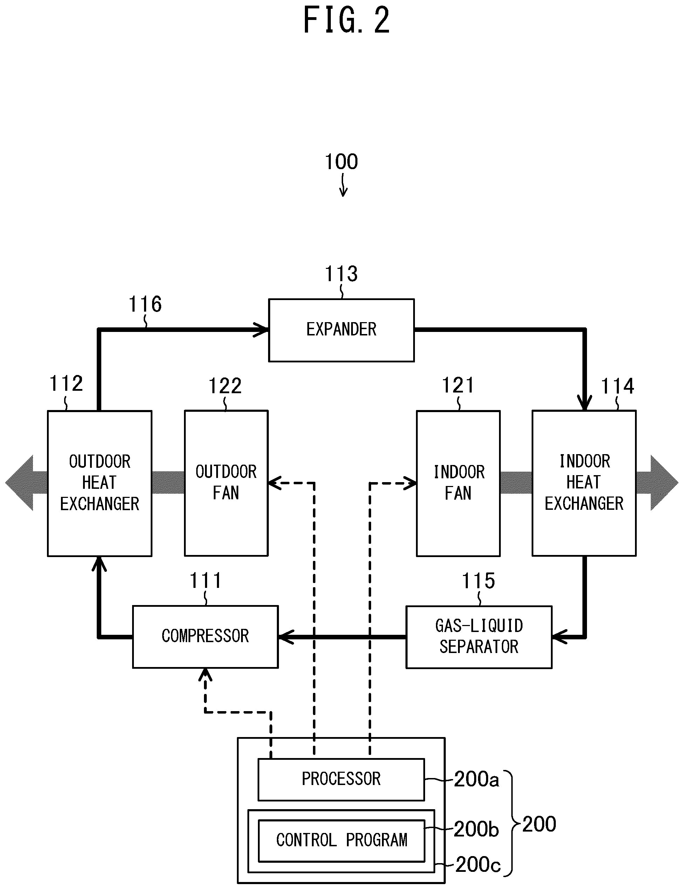

As illustrated in FIG. 2, the air conditioner 100 includes a compressor 111 that compresses refrigerant, an outdoor heat exchanger 112 that functions as a condenser for condensing the compressed refrigerant, an expander 113 that expands the condensed refrigerant, an indoor heat exchanger 114 that functions as an evaporator for evaporation of the expanded refrigerant, and a gas-liquid separator 115 that separates, from liquid refrigerant, gaseous refrigerant resulting from the evaporation.

Additionally, the air conditioner 100 includes refrigerant piping 116 that guides the refrigerant. The refrigerant piping 116 is included in a closed circuit in which are connected in order the compressor 111, the outdoor heat exchanger 112, the expander 113, the indoor heat exchanger 114, and the gas-liquid separator 115. The gaseous refrigerant separated by the gas-liquid separator 115 returns back to the compressor 111.

The compressor 111 repeatedly performs operation of sucking the refrigerant in an internally-defined compression chamber, compressing the sucked-in refrigerant in the compression chamber, and ejecting the compressed refrigerant. This circulates the refrigerant through the refrigerant piping 116, thereby forming a refrigerant cycle and creating a state in which the indoor heat exchanger 114 is cooled and the outdoor heat exchanger 112 is heated.

The indoor heat exchanger 114 performs cooling of the compartment 910 by performing heat exchange with vehicle-inside air that is air inside the compartment 910. The outdoor heat exchanger 112, by performing heat exchange with vehicle-outside air that is air outside the railroad vehicle 900, discharges waste heat to the outside.

Additionally, the air conditioner 100 includes an indoor fan 121 that facilitates the heat exchange between the vehicle-inside air and the indoor heat exchanger 114. The indoor fan 121 sucks in the vehicle-inside air from the compartment 910, and causes the sucked-in vehicle-inside air to pass through the indoor heat exchanger 114 and to flow into the compartment 910. The vehicle-inside air passed through the indoor heat exchanger 114 is air-conditioned air, more specifically, cooled air. A rotation speed of the indoor fan 121 is variably controllable.

Additionally, the air conditioner 100 includes an outdoor fan 122 that facilitates the heat exchange between the vehicle-outside air and the outdoor heat exchanger 112. The outdoor fan 122 sucks in the vehicle-outside air from the outside, and causes the sucked-in vehicle-outside air to pass through the outdoor heat exchanger 112 and discharges the vehicle-outside air to the outside. A rotation speed of the outdoor fan 122 is variably controllable.

The compressor 111 is configured to enable variable adjustment of a circulation amount that is an amount of the refrigerant flowing per unit time in the refrigerant piping 116.

Specifically, the compressor 111 has a variable volume structure that enables, for a substantial volume of the aforementioned compression chamber, mechanical two-staged switching by a valve.

When the compressor 111 is switched to a state in which the compression chamber has a relatively large volume, the circulation amount of the refrigerant per unit time increases, and this causes an increase in a capacity of the air conditioner 100 for cooling the compartment 910 that is referred to as the "cooling capacity" hereinafter. Conversely, when the compressor 111 is switched to a state in which the compression chamber has a relatively small volume, the circulation amount of the refrigerant per unit time decreases in order to cause a decrease in the cooling capacity of the air conditioner 100.

The control device 200, by controlling the volume of the compression chamber of the compressor 111, performs two-staged switching for the cooling capacity of the air conditioner 100. Further, the control device 200 performs control to change the rotation speed of the indoor fan 121 and the rotation speed of the outdoor fan 122. Moreover, the control device 200, at the start of cooling operation, performs control to activate the compressor 111, the indoor fan 121, and the outdoor fan 122, and at the end of the cooling operation, performs control to stop the compressor 111, the indoor fan 121, and the outdoor fan 122.

Again with reference to FIG. 1, during conventional running of the railroad vehicle 900, condensation sometimes occurs on an inside surface of the compartment 910 regardless of whether the air conditioner 100 is operating.

This "inside surface of the compartment 910" is a term for collective reference to the inside surface of the glass window 920 defining the compartment 910, inside surfaces at side wall portions that are other than the glass window 920 and define the compartment 910, an inside surface of a gable wall defining the compartment 910, an inside surface of a ceiling defining the compartment 910, and the like.

Occurrence of condensation on the inside surface of the compartment 910 leads to loss of passenger comfort. Thus, in order to prevent the occurrence of condensation on the inside surface of the compartment 910, the control device 200 performs control to increase the cooling capacity of the air conditioner 100. For achievement of this control, the vehicle air conditioning apparatus 400 includes a sensor group for detection of existence of a possibility that condensation occurs.

The sensor group includes a vehicle-inside humidity sensor 310 for measurement of vehicle-inside humidity that is humidity in the compartment 910, a vehicle-inside temperature sensor 320 for measurement of a vehicle-inside temperature that is a temperature in the compartment 910, a vehicle-outside temperature sensor 330 for measurement of a vehicle-outside temperature that is a temperature outside of the railroad vehicle 900, and a vehicle-inside wind velocity sensor 340 for measurement of a vehicle-inside wind velocity that is a wind velocity of airflow formed in the compartment 910 by the air conditioner 100.

The sensor group also includes a vehicle-outside wind velocity sensor 350 for measurement of a vehicle-outside wind velocity that is a velocity of wind outside of the railroad vehicle 900. This "vehicle-outside wind velocity" means a relative wind velocity that is a velocity of wind experienced by the railroad vehicle 900. The relative wind velocity is a magnitude of a sum of a running velocity of the railroad vehicle 900 and a velocity of naturally generated wind. The control device 200, based on detection results detected by the vehicle-inside humidity sensor 310, the vehicle-inside temperature sensor 320, the vehicle-outside temperature sensor 330, the vehicle-inside wind velocity sensor 340, and the vehicle-outside wind velocity sensor 350, detects existence of a possibility that condensation occurs on the inside surface of the compartment 910. The control device 200 is an example of a vehicle condensation detection device.

The control device 200, upon detecting the existence of a possibility that condensation occurs, increase the cooling capacity of the air conditioner 100, in order to prevent the occurrence of condensation. The increase in the cooling capacity leads to an increase in a ratio of moisture amount condensed and removed by the indoor heat exchanger 114 to moisture amount in the vehicle-inside air. This leads to a decrease in humidity in the vehicle-inside air, and as a result, condensation is less likely to occur. That is to say, the cooling capacity is an example of a dehumidification capacity that is a capacity for decreasing the humidity in the compartment 910.

Specifically, functions of the control device 200 for detection of existence of a possibility that condensation occurs on the inside surface of the compartment 910 are described below.

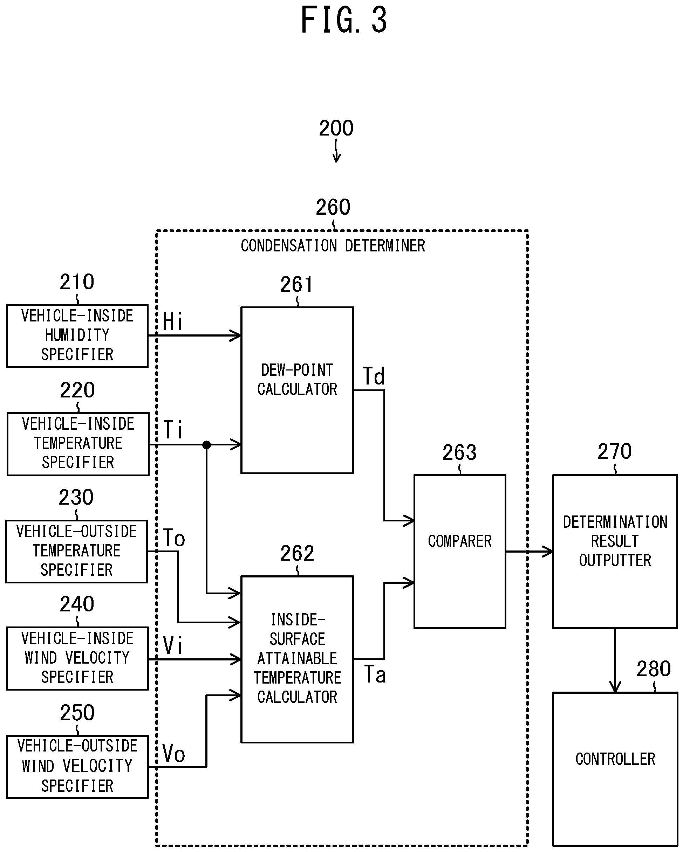

As illustrated in FIG. 3, the control device 200 includes a vehicle-inside humidity specifier 210 that specifies vehicle-inside humidity Hi. The vehicle-inside humidity specifier 210 specifies the vehicle-inside humidity Hi by acquiring a measurement result from the vehicle-inside humidity sensor 310 illustrated in FIG. 1.

Furthermore, the control device 200 includes a vehicle-inside temperature specifier 220 that specifies a vehicle-inside temperature Ti. The vehicle-inside temperature specifier 220 specifies the vehicle-inside temperature Ti by acquiring a measurement result from the vehicle-inside temperature sensor 320 illustrated in FIG. 1.

Furthermore, the control device 200 includes a vehicle-outside temperature specifier 230 that specifies a vehicle-outside temperature To. The vehicle-outside temperature specifier 230 specifies the vehicle-outside temperature To by acquiring a measurement result from the vehicle-outside temperature sensor 330 illustrated in FIG. 1.

Furthermore, the control device 200 includes a vehicle-inside wind velocity specifier 240 that specifies a vehicle-inside wind velocity Vi. The vehicle-inside wind velocity specifier 240 specifies the vehicle-inside wind velocity Vi by acquiring a measurement result from the vehicle-inside wind velocity sensor 340 illustrated in FIG. 1.

Furthermore, the control device 200 includes a vehicle-outside wind velocity specifier 250 that specifies a vehicle-outside wind velocity Vo. The vehicle-outside wind velocity specifier 250 specifies the vehicle-outside wind velocity Vo by acquiring a measurement result from the vehicle-outside wind velocity sensor 350 illustrated in FIG. 1.

Furthermore, the control device 200 includes a condensation determiner 260 that, using values of the vehicle-inside humidity Hi specified by the vehicle-inside humidity specifier 210, the vehicle-inside temperature Ti specified by the vehicle-inside temperature specifier 220, the vehicle-outside temperature To specified by the vehicle-outside temperature specifier 230, the vehicle-inside wind velocity Vi specified by the vehicle-inside wind velocity specifier 240, and the vehicle-outside wind velocity Vo specified by the vehicle-outside wind velocity specifier 250, makes a condensation determination that is a determination on a state exists in which condensation can occur on the inside surface of the compartment 910.

The condensation determiner 260 includes a dew-point calculator 261 that calculates, using the vehicle-inside humidity Hi specified by the vehicle-inside humidity specifier 210 and the vehicle-inside temperature Ti specified by the vehicle-inside temperature specifier 220, a dew point Td of the vehicle-inside air that is air inside the compartment 910.

Specifically, the dew-point calculator 261 obtains the dew point Td by calculating water vapor partial pressure in humid air using the vehicle-inside humidity Hi and the vehicle-inside temperature Ti, and specifying a temperature at which the calculated water vapor partial pressure is the saturation water vapor pressure.

Additionally, the condensation determiner 260 includes an inside-surface attainable temperature calculator 262 that, using the vehicle-inside temperature Ti specified by the vehicle-inside temperature specifier 220, the vehicle-outside temperature To specified by the vehicle-outside temperature specifier 230, the vehicle-inside wind velocity Vi specified by the vehicle-inside wind velocity specifier 240, and the vehicle-outside wind velocity Vo specified by the vehicle-outside wind velocity specifier 250, calculates an inside-surface attainable temperature Ta representing an attainable temperature on the inside surface of the compartment 910.

Specifically, the inside-surface attainable temperature calculator 262 calculates, using the vehicle-inside temperature Ti and the vehicle-outside temperature To, a temperature difference ΔT that is a difference between the vehicle-inside temperature Ti and the vehicle-outside temperature To. The temperature difference ΔT is defined by the formula below.

$$\Delta T = To - Ti \quad (1)$$

Then the inside-surface attainable temperature calculator 262 calculates a temperature correction amount δT that is defined in advance as a function dependent on the temperature difference ΔT. The temperature correction amount δT represents an amount of change in a temperature at a position on the inside surface of the compartment 910 from the vehicle-inside temperature Ti, due to heat exchange caused by the temperature difference ΔT that is the difference between the vehicle-inside temperature Ti and the vehicle-outside temperature To. Then the inside-surface attainable temperature calculator 262 calculates the inside-surface attainable temperature Ta defined by the formula below.

$$Ta = Ti + \delta T \quad (2)$$

The temperature correction amount δT is, more specifically, defined by the formula below, in which a thermal resistivity that is a physical quantity representing a resistance of the vehicle-inside temperature Ti to a change caused by the temperature difference ΔT is taken to be "R".

$$\delta T = R \times \Delta T \quad (3)$$

The thermal resistivity R is a positive value. In conditions under which condensation may possibly occur, that is, in the case of To < Ti, the temperature difference ΔT obtained by the aforementioned formula (1) is a negative value, and therefore, the temperature correction amount δT obtained by the aforementioned formula (3) is also a negative value. In this case, the aforementioned formula (2) indicates that, due to transfer of heat from the compartment 910 to the outside of the railroad vehicle 900, the temperature at the position of the inside surface of the compartment 910 decreases from the vehicle-inside temperature Ti by the absolute value of the temperature correction amount δT.

For example, in the case where the vehicle-inside temperature Ti is 25 °C and the temperature correction amount δT is -13.2, the result obtained by the aforementioned formula (2) is as follows: Ta = 25 + (-13.2) = 11.8 °C.

The aforementioned thermal resistivity R is defined by the formula below, in which a thermal resistance of the vehicle-inside air that is air inside the compartment 910 (referred to as "vehicle-inside thermal resistance", hereinafter) is taken to be θi and a thermal resistance of the vehicle-outside air that is air outside the railroad vehicle 900 (referred to as "vehicle-outside thermal resistance", hereinafter) is taken to be $\theta o$.

$$R = \theta i / (\theta i + \theta o) \qquad (4)$$

The vehicle-inside thermal resistance $\theta i$ is defined in advance as a function $f(Vi)$ that is dependent on the vehicle-inside wind velocity so as to decrease with increase in the vehicle-inside wind velocity $Vi$. Thus, the inside-surface attainable temperature calculator 262 can calculate the vehicle-inside thermal resistance $\theta i$ by substitution of the vehicle-inside wind velocity $Vi$ into the function $f(Vi)$.

The vehicle-outside thermal resistance $\theta o$ is defined in advance as a function $f(Vo)$ that is dependent on the vehicle-outside wind velocity so as to decrease with increase in the vehicle-outside wind velocity $Vo$. Thus, the inside-surface attainable temperature calculator 262 can calculate the vehicle-outside thermal resistance $\theta o$ by substitution of the vehicle-outside wind velocity $Vo$ into the function $f(Vo)$.

The denominator on the right-hand side of the aforementioned formula (4), that is, overall thermal resistance defined by a sum of the vehicle-inside thermal resistance $\theta i$ and the vehicle-outside thermal resistance $\theta o$, is dependent on the vehicle-inside wind velocity so as to decrease with increase in the vehicle-inside wind velocity $Vi$, and also is dependent on the vehicle-outside wind velocity so as to decrease with increase in the vehicle-outside wind velocity $Vo$.

The inside-surface attainable temperature calculator 262 calculates the thermal resistivity $R$ by substitution of the calculated vehicle-inside thermal resistance $\theta i$ and the vehicle-outside thermal resistance $\theta o$ into the aforementioned formula (4). Thereafter, the inside-surface attainable temperature calculator 262 calculates the temperature correction amount $\delta T$ by substitution of the calculated thermal resistivity $R$ into the aforementioned formula (3), and calculates the inside-surface attainable temperature $Ta$ by substitution of the calculated temperature correction amount $\delta T$ into the aforementioned formula (2).

Additionally, the condensation determiner 260 includes a comparer 263 that determines whether the inside-surface attainable temperature $Ta$ calculated by the inside-surface attainable temperature calculator 262 is lower than or equal to the dew point $Td$ calculated by the dew-point calculator 261. In the case where the inside-surface attainable temperature $Ta$ is lower than or equal to the dew point $Td$, the state exists in which condensation can occur on the inside surface of the compartment 910.

Thus, the condensation determiner 260, in the case of $Ta \leq Td$, determines that the state exists in which condensation can occur on the inside surface of the compartment 910, and in the case of $Ta \geq Td$, determines that the state does not exist in which condensation can occur on the inside surface of the compartment 910.

Furthermore, the control device 200 includes a determination result outputter 270 that outputs a determination result that is a result of determination by the condensation determiner 260, and a controller 280 that receives output of the determination result from the determination result outputter 270.

Upon receiving from the determination result outputter 270 the output of the determination result indicating the existence of the state in which condensation can occur on the inside surface of the compartment 910, the controller 280, in response to the output, causes the air conditioner 100 to start a condensation suppression operation for suppressing the occurrence of condensation.

In the present embodiment, the condensation suppression operation means an operation that sets the cooling capacity of the air conditioner 100 relatively high and sets the rotation speed of the indoor fan 121 relatively high. Conversely, a cooling operation in which the cooling capacity of the air conditioner 100 is set relatively low and the rotation speed of the indoor fan 121 is set relatively low is called a "normal cooling operation".

As illustrated in FIG. 2, the control device 200 includes a processor 200a and a memory 200c. The memory 200c stores a control program 200b. The control program 200b defines processes of condensation monitor processing for, upon detection of the existence of the possibility that condensation occurs, causing the air conditioner 100 to start the condensation suppression operation. The processor 200a executes the control program 200b to achieve the functions of each component illustrated in FIG. 3.

Hereinafter, specific operation of the condensation monitor processing performed by the control device 200 is described below, assuming that the air conditioner 100 is performing the normal cooling operation.

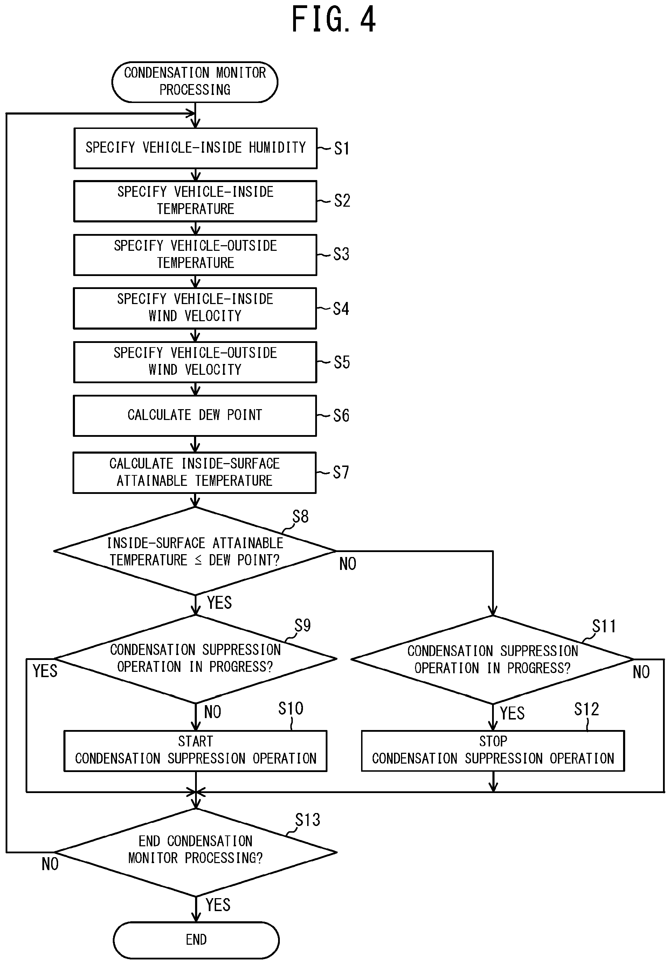

First, as illustrated in FIG. 4, the vehicle-inside humidity specifier 210 specifies the vehicle-inside humidity $Hi$ by acquiring a measurement result from the vehicle-inside humidity sensor 310 (vehicle-inside humidity specifying step S1).

Furthermore, the vehicle-inside temperature specifier 220 specifies the vehicle-inside temperature $Ti$ by acquiring a measurement result from the vehicle-inside temperature sensor 320 (vehicle-inside temperature specifying step S2).

Furthermore, the vehicle-outside temperature specifier 230 specifies the vehicle-outside temperature $To$ by acquiring a measurement result from the vehicle-outside temperature sensor 330 (vehicle-outside temperature specifying step S3).

Furthermore, the vehicle-inside wind velocity specifier 240 specifies the vehicle-inside wind velocity $Vi$ by acquiring a measurement result from the vehicle-inside wind velocity sensor 340 (vehicle-inside wind velocity specifying step S4).

Furthermore, the vehicle-outside wind velocity specifier 250 specifies the vehicle-outside wind velocity Vo by acquiring a measurement result from the vehicle-outside wind velocity sensor 350 (vehicle-outside wind velocity specifying step S5).

Then the dew-point calculator 261 calculates, using the vehicle-inside humidity Hi and the vehicle-inside temperature Ti, the dew point Td of the vehicle-inside air that is the air inside the compartment 910 (dew-point calculation step S6).

Then the inside-surface attainable temperature calculator 262, using the values of the vehicle-inside temperature Ti, the vehicle-outside temperature To, the vehicle-inside wind velocity Vi, and the vehicle-outside wind velocity Vo, calculates the inside-surface attainable temperature Ta representing an attainable temperature on the inside surface of the compartment 910 (inside-surface attainable temperature calculation step S7).

Specifically, the inside-surface attainable temperature calculator 262 calculates, using the vehicle-inside temperature Ti and the vehicle-outside temperature To, the temperature difference ΔT that is a difference between the vehicle-inside temperature Ti and the vehicle-outside temperature To, that is, To - Ti.

Furthermore, the inside-surface attainable temperature calculator 262 calculates the vehicle-inside thermal resistance θi. The memory 200c stores in advance, as a function defining the vehicle-inside thermal resistance θi, a function f(Vi) that is dependent on the vehicle-inside wind velocity so as to decrease with increase in the vehicle-inside wind velocity Vi. Thus, the inside-surface attainable temperature calculator 262 calculates the vehicle-inside thermal resistance θi by substitution, into the function f(Vi), of the vehicle-inside wind velocity Vi specified in the vehicle-inside wind velocity specifying step S4.

Furthermore, the inside-surface attainable temperature calculator 262 calculates the vehicle-outside thermal resistance θo. The memory 200c stores in advance, as a function defining the vehicle-outside thermal resistance θo, a function f(Vo) that is dependent on the vehicle-outside wind velocity so as to decrease with increase in the vehicle-outside wind velocity Vo. Thus, the inside-surface attainable temperature calculator 262 calculates the vehicle-outside thermal resistance θo by substitution, into the function f(Vo), of the vehicle-outside wind velocity Vo specified in the vehicle-outside wind velocity specifying step S5.

Then the inside-surface attainable temperature calculator 262 calculates the inside-surface attainable temperature Ta by using the calculated temperature difference ΔT, vehicle-inside thermal resistance θi, and vehicle-outside thermal resistance θo, and the aforementioned formulas (2)-(4).

Then the comparer 263 determines whether the inside-surface attainable temperature Ta calculated in the inside-surface attainable temperature calculation step S7 is lower than or equal to the dew point Td calculated in the dew-point calculation step S6 (comparing step S8). The steps from the dew-point calculation step S6 to the comparing step S8 form an example of a condensation determination step for making a condensation determination that is a determination on whether the state exists in which condensation can occur on the inside surface of the compartment 910.

In the case where the inside-surface attainable temperature Ta is lower than or equal to the dew point Td (YES in the comparing step S8), the state exists in which condensation can occur on the inside surface of the compartment 910. Thus, the controller 280, upon receiving from the determination result outputter 270 the output of the determination result indicating that the state exists, determines whether the air conditioner 100 is currently performing the condensation suppression operation (first operation determination step S9).

In the case where the air conditioner 100 is not currently performing the condensation suppression operation (NO in the first operation determination step S9), that is, in the case where the air conditioner 100 is currently performing the normal cooling operation, the controller 280 causes the air conditioner 100 to start the condensation suppression operation (condensation suppression operation starting step S10).

Specifically, the controller 280 increases the cooling capacity of the air conditioner 100 by switching the compressor 111 to a state in which the compression chamber has a relatively large volume. This increases a ratio of moisture amount condensed and removed by the indoor heat exchanger 114 to moisture amount in the vehicle-inside air, leading to a decrease in humidity in the vehicle-inside air, and as a result, condensation is less likely to occur. Further, in the case of prior occurrence of condensation, such condensation is promptly removed.

Furthermore, the controller 280 increases the rotation speed of the indoor fan 121. This causes an increase in flow speed of flowing airflow that is cooled air flowing from the air conditioner 100 into the compartment 910, and as a result, also causes an increase in flow speed of airflow flowing along the inside surface of the compartment 910, especially in flow speed of airflow flowing along the inside surface of the glass window 920. That is to say, a part of the flowing airflow flows along the inside surface of the compartment 910. This facilitates drying of the inside surface of the compartment 910, and thus, condensation is less likely to occur. Further, in the case of prior occurrence of condensation, such condensation is promptly removed.

Conversely, in the case where the inside-surface attainable temperature Ta exceeds the dew point Td (NO in the comparing step S8), the state cannot be said to exist in which condensation can occur on the inside surface of the compartment 910. Thus, the controller 280, upon receiving from the determination result outputter 270 such output of the determination result, determines whether the air conditioner 100 is currently performing the condensation suppression operation (second operation determination step S11).

Then, in the case where the air conditioner 100 is currently operating in the condensation suppression operation (YES in the second operation determination step S11), the controller 280 causes the air conditioner 100 to stop the wasteful condensation suppression operation (condensation suppression operation stopping step S 12), in order to cause the air conditioner 100 to return to the normal cooling operation.

The controller 280, upon determining in the first operation determination step S9 that the air conditioner 100 is currently performing the condensation suppression operation (YES in the first operation determination step S9), or upon determining in the second operation determination step S11 that the air conditioner 100 is not currently performing the condensation suppression operation (NO in the second operation determination step S11), determines whether to cause ending of the condensation monitor processing i (end determination step S13).

The controller 280, after causing the air conditioner 100 to start the condensation suppression operation in the condensation suppression operation starting step S10, and also, after causing the air conditioner 100 to return to the normal cooling operation in the condensation suppression operation stopping step S12, shifts the processing to the end determination step S13.

The controller 280, during end determination step S13, in the case where the condensation monitor processing is to be continued (NO in the end determination step S 13), returns the processing to the vehicle-inside humidity specifying step S1, or in the case where the condensation monitor processing is not to be continued (YES in the end determination step S13), ends the condensation monitor processing.

As described above, according to the present embodiment, a temperature that the temperature on the inside surface of the compartment 910 is reaching is obtained in consideration of the value of the vehicle-inside wind velocity Vi. In comparison to conventional operation that does not consider the value of the vehicle-inside wind velocity Vi, the temperature that the temperature on the inside surface of the compartment 910 reaches can be more accurately estimated. Thus, detection of the existence of the state in which condensation can occur on the inside surface of the compartment 910 can be performed more accurately than in the conventional operation.

Specifically, the condensation determiner 260 calculates the inside-surface attainable temperature Ta by obtaining the vehicle-inside thermal resistance $\theta i$ by using the value of the vehicle-inside wind velocity Vi, obtaining the temperature correction amount $\delta T$ that is defined by the formula including the product of the vehicle-inside thermal resistance $\theta i$ and the temperature difference $\Delta T$, and then correcting the vehicle-inside temperature Ti by the temperature correction amount $\delta T$. The inside-surface attainable temperature Ta that is calculated in the aforementioned manner accurately represents the temperature that the inside surface of the compartment 910 is reaching. Thus, detection of the existence of the state in which condensation can occur on the inside surface of the compartment 910 can be performed more accurately than in conventional processing.

Embodiment 2

In Embodiment 1, the vehicle-inside wind velocity sensor 340 is used to specify the vehicle-inside wind velocity Vi, and the vehicle-inside humidity sensor 310 is used to specify the vehicle-inside humidity Hi, although these sensors are not necessary. Hereinafter, a specific example in which these sensors are not used is described.

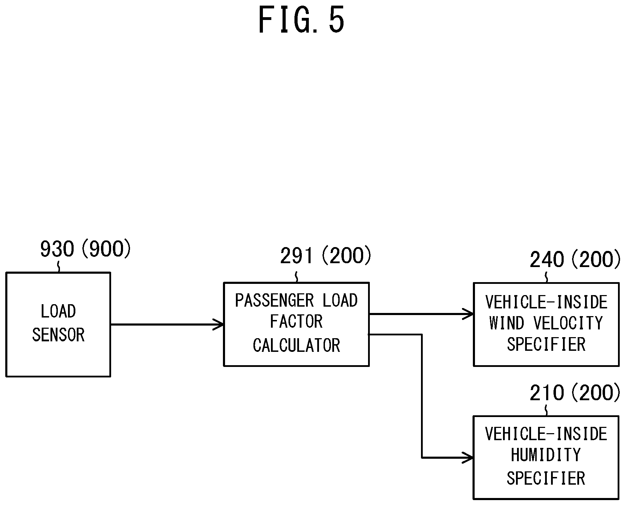

In the present embodiment, a load sensor 930 installed in the railroad vehicle 900 is used, as illustrated in FIG. 5. The load sensor 930 detects a total weight of the vehicle and the passengers.

The "vehicle" means a vehicle that is included in multiple coupled vehicles included in the railroad vehicle 900 illustrated in FIG. 1 and defines the compartment 910 for which occurrence of condensation is to be prevented. The "passengers" mean all the passengers riding in the compartment 910.

Furthermore, the control device 200 includes a passenger load factor calculator 291 that calculates a passenger load factor by using a detection result detected by the load sensor 930. First, the passenger load factor calculator 291 obtains, by dividing by an average weight for one passenger a value obtained by subtracting an already-known weight of the vehicle from the detection result detected by the load sensor 930, an estimated value of a total number of the passengers riding in the compartment 910. Then the passenger load factor calculator 291 divides the estimated value by a carrying capacity that is predetermined for the compartment 910, thereby obtaining the passenger load factor of the compartment 910.

Since the vehicle-inside wind velocity Vi depends on the passenger load factor of the compartment 910, the vehicle-inside wind velocity Vi can be approximated by the passenger load factor. Thus, the vehicle-inside wind velocity specifier 240 specifies the vehicle-inside wind velocity Vi based on the passenger load factor calculated by the passenger load factor calculator 291. Further, since the vehicle-inside wind velocity Vi also depends on the rotation speed of the indoor fan 121 illustrated in FIG. 2, the vehicle-inside wind velocity specifier 240 may specify the vehicle-inside wind velocity Vi with additional reference to data representing the rotation speed of the indoor fan 121.

Further, the vehicle-inside wind velocity Vi also depends on the temperature difference $\Delta T$ that is a difference between the vehicle-inside temperature Ti and the vehicle-outside temperature To and on the running velocity of the railroad vehicle 900. Thus, the vehicle-inside wind velocity specifier 240 may specify the vehicle-inside wind velocity Vi with additional reference to one of detection results for the temperature difference $\Delta T$ and the running velocity of the railroad vehicle 900 or to data obtained by combining these detection results. The temperature difference $\Delta T$ can be acquired from the inside-surface attainable temperature calculator 262. Vehicle velocity data representing the running velocity of the railroad vehicle 900 can be acquired from a train information management system that performs collective management of data relating to running state and control of the railroad vehicle 900.

Specifically, the memory 200c illustrated in FIG. 2 stores in advance (i) a table or a function for specifying the vehicle-inside wind velocity $Vi$ from the passenger load factor, (ii) a table or a function for specifying the vehicle-inside wind velocity $Vi$ from the passenger load factor and the rotation speed of the indoor fan 121, (iii) a table or a function for specifying the vehicle-inside wind velocity $Vi$ from the passenger load factor, the rotation speed of the indoor fan 121, and the temperature difference $\Delta T$, or (iv) a table or a function for specifying the vehicle-inside wind velocity $Vi$ from the passenger load factor, the rotation speed of the indoor fan 121, the temperature difference $\Delta T$, and the running velocity of the railroad vehicle 900. The vehicle-inside wind velocity specifier 240 can specify the vehicle-inside wind velocity $Vi$ by using such table or function.

Additionally, since the vehicle-inside humidity $Hi$ depends on the passenger load factor of the compartment 910, the vehicle-inside humidity $Hi$ can be approximated by the passenger load factor. Thus, the vehicle-inside humidity specifier 210 specifies the vehicle-inside humidity $Hi$ based on the passenger load factor calculated by the passenger load factor calculator 291. Specifically, the memory 200c illustrated in FIG. 2 stores in advance a table or a function for specifying the vehicle-inside humidity $Hi$ from the passenger load factor. This function may include, as a parameter, a physical quantity representing a moisture discharge amount per one passenger that is associated with breathing and perspiration. The vehicle-inside humidity specifier 210 can specify the vehicle-inside humidity $Hi$ by using such table or function.

In the case where the vehicle-inside wind velocity specifier 240 and the vehicle-inside humidity specifier 210 can acquire data representing the passenger load factor from the train information management system that performs collective management of the data relating to the running state and control of the railroad vehicle 900, the passenger load factor calculator 291 is omittable.

Embodiment 3

In Embodiment 1, the vehicle-outside temperature sensor 330 is used to specify the vehicle-outside temperature $To$. However, the vehicle-outside temperature sensor 330 is not necessarily included. Hereinafter, a specific example in which the vehicle-outside temperature sensor 330 is not used is described.

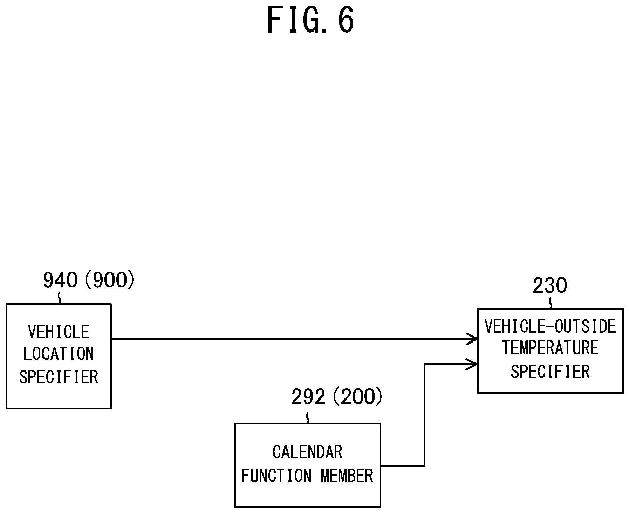

In the present embodiment, a vehicle location specifier 940 installed in the railroad vehicle 900 is used, as illustrated in FIG. 6. The vehicle location specifier 940 constantly outputs vehicle location data representing a current geographical location of the railroad vehicle 900 that is running.

The vehicle location data at least enables specifying whether the railroad vehicle 900 is running on the ground or is running under the ground. In the case where the railroad vehicle 900 runs via a fixed route, the current geographical location of the railroad vehicle 900 can be specified by using a travelled distance from a reference location. In such case, data in terms of kilometers may be employed as the vehicle location data.

Furthermore, the control device 200 includes a calendar function member 292 for specifying date data representing a current date. The calendar function member 292 outputs the date data representing a current date. The date data may include information of a current time.

Since the vehicle-outside temperature $To$ depends on the current geographical location of the railroad vehicle 900 and the current date, the vehicle-outside temperature $To$ can be approximated by the current geographical location of the railroad vehicle 900 and the current date. Thus, the vehicle-outside temperature specifier 230 specifies the vehicle-outside temperature $To$ based on the vehicle location data acquired from the vehicle location specifier 940 and the date data acquired from the calendar function member 292.

Specifically, the memory 200c illustrated in FIG. 2 stores in advance a table or a function for specifying the vehicle-outside temperature $To$ from the vehicle location data and the date data. The vehicle-outside temperature specifier 230 can specify the vehicle-outside temperature $To$ by using such table or function.

The aforementioned train information management system may serve as the vehicle location specifier 940. In the case where the date data can be acquired from the train information management system, the calendar function member 292 is omittable.

Embodiment 4

In Embodiment 1, the vehicle-outside wind velocity sensor 350 is used to specify the vehicle-outside wind velocity $Vo$. However, the vehicle-outside wind velocity sensor 350 is not necessarily included. Hereinafter, a specific example in which the vehicle-outside wind velocity sensor 350 is not used is described.

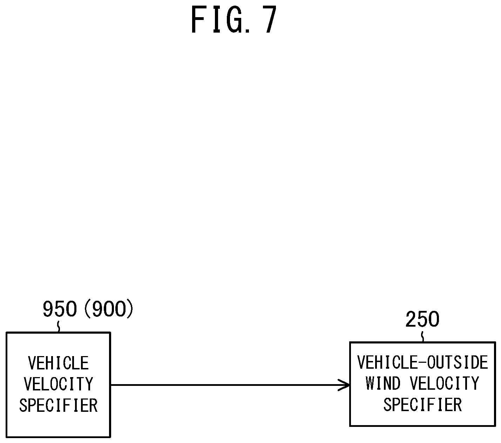

In the present embodiment, a vehicle velocity specifier 950 installed in the railroad vehicle 900 is used, as illustrated in FIG. 7. The vehicle velocity specifier 950 constantly outputs vehicle velocity data representing a current running velocity of the railroad vehicle 900. The aforementioned train information management system may serve as the vehicle velocity specifier 950.

Since the vehicle-outside wind velocity $Vo$ indicates a relative wind velocity that is a velocity of wind experienced by the railroad vehicle 900 as described above, the vehicle-outside wind velocity Vo can be approximated by using the running velocity for the railroad vehicle 900. Thus, the vehicle-outside wind velocity specifier 250 specifies the vehicle-outside wind velocity Vo by using the vehicle velocity data acquired from the vehicle velocity specifier 950.

Embodiment 5

The air conditioner 100 included in the configuration according to Embodiment 1 may include means, different from the indoor fan 121, for forming airflow in the compartment 910. Hereinafter, a specific example of such configuration is described.

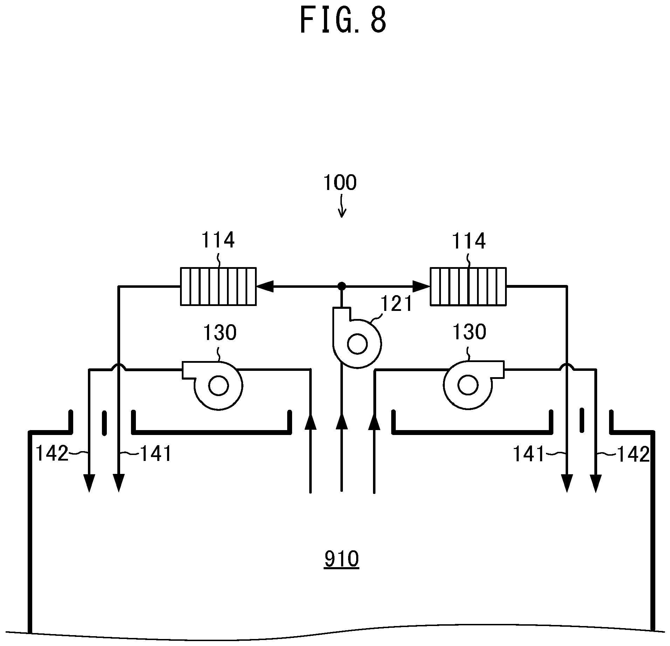

As illustrated in FIG. 8, an air conditioner 100 according to the present embodiment includes, in addition to the indoor fan 121, a stirring fan 130 that facilitates stirring of air in the compartment 910. A rotation speed of the stirring fan 130 is variably controllable, similarly to the indoor fan 121.

The indoor fan 121 forms a flowing airflow 141 that is air cooled by passing through the indoor heat exchanger 114 and flowing into the compartment 910. In contrast, the stirring fan 130 forms a stirring airflow 142 that is different from the flowing airflow 141 and stirs the air in the compartment 910. The stirring airflow 142 circulates without passing through the indoor heat exchanger 114.

Each of the stirring airflow 142 and the flowing airflow 141 flows, from the ceiling of the compartment 910, downwardly along both of inside surfaces of a pair of side walls facing each other along a width direction of the railroad vehicle 900. The "side wall" here is conceived as including the glass window 920 illustrated in FIG. 1.

The "condensation suppression operation" in the present embodiment means an operation that sets the cooling capacity of the air conditioner 100 high, sets the rotation speed of the indoor fan 121 high, and sets the rotation speed of the stirring fan 130 high. That is to say, the controller 280 illustrated in FIG. 3, in the condensation suppression operation starting step S10 illustrated in FIG. 4, increases the rotation speed of the stirring fan 130, in addition to increasing the cooling capacity of the air conditioner 100 and increasing the rotation speed of the indoor fan 121. This "increasing the rotation speed" includes activating the stirring fan 130 that is in a stopped state.

Increasing the rotation speed of the stirring fan 130 causes an increase in flow speed of the stirring airflow 142 that flows along both of the inside surfaces of the pair of the side walls facing each other along the width direction of the railroad vehicle 900. This promotes drying of the inside surfaces of the pair of side walls, causing condensation to be less likely to occur. Further, in the case of prior occurrence of condensation, such condensation is promptly removed.

Embodiment 6

In Embodiment 1, the determination result outputter 270 outputs to the controller 280 the determination result that is a result of determination by the condensation determiner 260. However, the determination result may be output to a device other than the controller 280. Hereinafter, a specific example of such configuration is described.

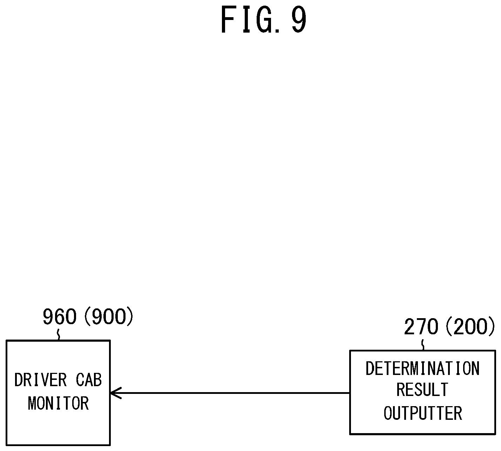

In the present embodiment, the determination result outputter 270 outputs the determination result of the condensation determination to a driver cab monitor 960, as illustrated in FIG. 9. The driver cab monitor 960 is installed in a driver cab of the railroad vehicle 900 for monitoring of an operation state of each device included in the railroad vehicle 900.

Upon the determination result outputter 270 outputting to the driver cab monitor 960 a determination result indicating the existence of the state in which condensation can occur on the inside surface of the compartment 910, a notification screen indicating the existence of the state is displayed on the driver cab monitor 960. Display of the notification screen allows a crew to grasp the existence of the state in which condensation can occur on the inside surface of the compartment 910.

The crew can, after checking the notification screen, switch the air conditioner 100 by manual operation from a state of performing the normal cooling operation to a state of performing the condensation suppression operation.

Although Embodiments 1-6 are described above, modifications as described below may be made.

Although aforementioned Embodiment 1 describes an example configuration in which the inside-surface attainable temperature calculator 262 calculates the inside-surface attainable temperature Ta using the vehicle-outside wind velocity Vo, the inside-surface attainable temperature Ta may be obtained without using the vehicle-outside wind velocity Vo. Even when the aforementioned formulas (1)-(4) are used, in a specific example, the inside-surface attainable temperature Ta can be calculated without using the vehicle-outside wind velocity Vo as a variable, by replacing the vehicle-outside wind velocity Vo with a fixed constant representing an already-known average velocity of the railroad vehicle 900. Additionally, by approximating the vehicle-outside thermal resistance $\theta o$ in the aforementioned formula (4) by a fixed constant, the vehicle-inside thermal resistance $\theta i$ and the temperature difference $\Delta T$ can be used to calculate, using the inside-surface attainable temperature Ta that is proportional to the product of the vehicle-inside thermal resistance $\theta i$ and the temperature difference $\Delta T$. In the case as above of obtaining the inside-surface attainable temperature Ta without using the vehicle-outside wind velocity Vo, the vehicle-outside wind velocity specifier 250 and the vehicle-outside wind velocity sensor 350 is omittable.

In aforementioned Embodiment 1, the increase in the cooling capacity of the air conditioner 100 to be achieved when the condensation suppression operation is started is achieved by causing the increase in the volume of the compression chamber of the variable-volume type compressor 111. In the case where the air conditioner 100 includes multiple compressors 111, increasing a number of the compressors 111 that are made to operate also enables the increase in the cooling capacity of the air conditioner 100. Additionally, in the case where the compressor 111 includes an inverter for which a switching frequency for operation of compressing the refrigerant is variably adjustable, increasing the switching frequency also enables the increase in the cooling capacity of the air conditioner 100.

Aforementioned Embodiment 1 describes an example in which the dehumidification capacity of the air conditioner 100 that is a capacity for decreasing the humidity in the compartment 910 is the cooling capacity for cooling the compartment 910. In the case where the air conditioner 100 can perform a dehumidification operation, the condensation suppression operation may be an operation in a state where a capacity for the dehumidification is increased. This "dehumidification operation" is not necessarily cooling the compartment 910 and means an operation of, by heating indoor air passed through the indoor heat exchanger 114 by using a heater, decreasing humidity while suppressing excessive decrease in the vehicle-inside temperature. The increase in the dehumidification capacity is achievable by, similarly to the increase in the cooling capacity, increasing the volume of the compression chamber of the compressor 111, increasing the number of the compressors 111 that are made to operate, or increasing the switching frequency for compression performed by the compressor 111.

In aforementioned Embodiment 1, the rotation speed of the indoor fan 121 is increased in the condensation suppression operation starting step S10. Conversely, the rotation speed of the indoor fan 121 may be decreased. Decreasing the rotation speed of the indoor fan 121 causes a decrease in a circulation speed of the indoor air, leading to a decrease in a speed of the indoor air passing through the indoor heat exchanger 114. This may possibly lead to a higher condensation ratio, which is a ratio of moisture amount condensed and removed by the indoor heat exchanger 114 to moisture amount in the vehicle-inside air, than in the case of normal cooling operation. Increasing the condensation ratio causes a decrease in the humidity in the vehicle-inside air, and thus causes condensation to be less likely to occur.

Aforementioned Embodiment 1 describes an example in which the condensation suppression operation is an operation of increasing the cooling capacity as the dehumidification capacity and changing the rotation speed of the indoor fan 121. No particular limitation is placed on the condensation suppression operation, and any operation that causes suppression of the occurrence of condensation can be the condensation suppression operation. The condensation suppression operation may include increasing the rotation speed of the outdoor fan 122. The increase in the rotation speed of the outdoor fan 122 causes an increase in an amount of waste heat, and thus, can increase the cooling capacity as the dehumidification capacity.

In the case where the air conditioner 100 is configured to take outside air that is air outside the railroad vehicle 900 into the compartment 910, the condensation suppression operation may include increasing an amount of the outside air to be taken in the compartment 910. This "increasing an amount of the outside air taken in" includes causing the start of taking in the outside air.

In the case of the configuration according to Embodiment 6 in which the notification indicating the existence of the state in which condensation can occur on the inside surface of the compartment 910 is sent to the crew, the condensation suppression operation as described above may be started by manual operation by the crew.

The foregoing describes some example embodiments for explanatory purposes. Accordingly, the specification and drawings are to be regarded in an illustrative rather than a restrictive sense. This detailed description, therefore, is not to be taken in a limiting sense, and the scope of the invention is defined only by the included claims.

**Claims**

1. A vehicle condensation detection device (200) comprising:

   a vehicle-inside humidity specifier (210) to specify vehicle-inside humidity that is humidity in a compartment of a vehicle;
   a vehicle-inside temperature specifier (220) to specify a vehicle-inside temperature that is a temperature in the compartment;
   a vehicle-outside temperature specifier (230) to specify a vehicle-outside temperature that is a temperature outside of the vehicle;
   a vehicle-inside wind velocity specifier (240) to specify a vehicle-inside wind velocity that is a wind velocity of airflow formed in the compartment by an air conditioner (100) for air conditioning of the compartment;
   a condensation determiner (260) to make, using values of the vehicle-inside humidity specified by the vehicle-inside humidity specifier (210), the vehicle-inside temperature specified by the vehicle-inside temperature specifier (220), the vehicle-outside temperature specified by the vehicle-outside temperature specifier (230), and the vehicle-inside wind velocity specified by the vehicle-inside wind velocity specifier (240), a condensation determination that is a determination on whether a state exists in which condensation can occur on an inside surface of the compartment; and

a determination result outputter (270) to output a determination result that is a result of the determination by the condensation determiner (260);

**characterized in that** the condensation determiner (260) includes:

a dew-point calculator (261) to calculate, using the vehicle-inside humidity specified by the vehicle-inside humidity specifier (210) and the vehicle-inside temperature specified by the vehicle-inside temperature specifier (220), a dew point of vehicle-inside air that is air inside the compartment;

an inside-surface attainable temperature calculator (262) to (i) calculate, using the vehicle-inside wind velocity specified by the vehicle-inside wind velocity specifier (240), a vehicle-inside thermal resistance that represents a thermal resistance of the vehicle-inside air and is dependent on the vehicle-inside wind velocity so as to decrease with increase in the vehicle-inside wind velocity, (ii) calculate, using the vehicle-inside temperature specified by the vehicle-inside temperature specifier (220) and the vehicle-outside temperature specified by the vehicle-outside temperature specifier (230), a temperature difference that is a difference between the vehicle-inside temperature and the vehicle-outside temperature, and (iii) calculate, using the vehicle-inside thermal resistance and the temperature difference, an inside-surface attainable temperature representing an attainable temperature on the inside surface of the compartment; and

a comparer (263) to determine whether the inside-surface attainable temperature calculated by the inside-surface attainable temperature calculator (262) is lower than or equal to the dew point calculated by the dew-point calculator (261).

2. The vehicle condensation detection device (200) according to claim 1, wherein the vehicle-inside humidity specifier (210) specifies the vehicle-inside humidity based on a passenger load factor for passengers riding in the compartment.

3. A vehicle air conditioning apparatus (400) comprising:

the vehicle condensation detection device (200) according to claim 1 or 2; and
the air conditioner (100) for air conditioning of the compartment, wherein

the vehicle condensation detection device (200) further includes:

a controller (280) to (i) receive from the determination result outputter (270) output of the determination result indicating existence of the state in which condensation can occur on the inside surface of the compartment, and (ii) in response to the output, cause the air conditioner (100) to start a condensation suppression operation for suppressing occurrence of condensation.

4. The vehicle air conditioning apparatus (400) according to claim 3, wherein

the air conditioner (100) has a dehumidification capacity that is a capacity for decreasing the humidity in the compartment,
the dehumidification capacity of the air conditioner (100) is variably controllable, and
the start of the condensation suppression operation causes an increase in the dehumidification capacity of the air conditioner (100).

5. The vehicle air conditioning apparatus (400) according to claim 3 or 4, wherein

the air conditioner (100) includes an indoor fan (121) to cause air-conditioned air to flow into the compartment,
a rotation speed of the indoor fan (121) is variably controllable, and
the start of the condensation suppression operation causes changing in the rotation speed of the indoor fan (121).

6. The vehicle air conditioning apparatus (400) according to any one of claims 3 to 5, wherein

the air conditioner (100) includes a stirring fan (130) to form a stirring airflow that is different from a flowing airflow and stirs the air in the compartment, the flowing airflow being the air-conditioned air flowing into the compartment,
a rotation speed of the stirring fan (130) is variably controllable, and
the start of the condensation suppression operation causes an increase in the rotation speed of the stirring fan (130).

7. A vehicle condensation detection method using a vehicle condensation detection device (200) according to claim 1 or 2, comprising:

a vehicle-inside humidity specifying step (S1) of specifying vehicle-inside humidity that is humidity in a compartment of a vehicle;
a vehicle-inside temperature specifying step (S2) of specifying a vehicle-inside temperature that is a temperature in the compartment;

a vehicle-outside temperature specifying step (S3) of specifying a vehicle-outside temperature that is a temperature outside of the vehicle;

a vehicle-inside wind velocity specifying step (S4) of specifying a vehicle-inside wind velocity that is a wind velocity of airflow formed in the compartment by an air conditioner (100) performing air conditioning of the compartment; and

a condensation determination step (S6-S8) of making, using values of the vehicle-inside humidity specified in the vehicle-inside humidity specifying step (S 1), the vehicle-inside temperature specified in vehicle-inside temperature specifying step (S2), the vehicle-outside temperature specified in vehicle-outside temperature specifying step (S3), and the vehicle-inside wind velocity specified in the vehicle-inside wind velocity specifying step (S4), a condensation determination that is a determination on whether a state exists in which condensation can occur on an inside surface of the compartment.

**Patentansprüche**

1.   Kondensationsdetektionsvorrichtung (200) für Fahrzeuge, die Folgendes umfasst:

einen Spezifizierer (210) für die Feuchtigkeit im Fahrzeuginnenraum, um die Feuchtigkeit im Fahrzeuginnenraum, d. h. Feuchtigkeit in einem Abteil eines Fahrzeugs, zu spezifizieren;

einen Spezifizierer (220) für die Temperatur im Fahrzeuginnenraum, um die Fahrzeuginnentemperatur, d. h. eine Temperatur in dem Abteil, zu spezifizieren;

einen Spezifizierer (230) für die Temperatur an der Fahrzeugaußenseite, um die Fahrzeugaußentemperatur, d. h. eine Temperatur an der Außenseite des Fahrzeugs, zu spezifizieren;

einen Spezifizierer (240) für die Windgeschwindigkeit im Fahrzeuginnenraum, um eine Windgeschwindigkeit im Fahrzeuginnenraum, d. h. Windgeschwindigkeit eines Luftstroms, der in dem Abteil durch eine Klimaanlage (100) zur Klimatisierung des Abteils gebildet wird, zu spezifizieren;

einen Kondensationsbestimmer (260), um unter Verwendung von Werten der Feuchtigkeit im Fahrzeuginnenraum, die von dem Spezifizierer (210) für die Feuchtigkeit im Fahrzeuginnenraum spezifiziert worden ist, der Fahrzeuginnentemperatur, die von dem Spezifizierer (220) für die Temperatur im Fahrzeuginnenraum spezifiziert worden ist, der Fahrzeugaußentemperatur, die von dem Spezifizierer (230) für die Temperatur an der Fahrzeugaußenseite spezifiziert worden ist, und der Windgeschwindigkeit im Fahrzeuginnenraum, die von dem Spezifizierer (240) für die Windgeschwindigkeit im Fahrzeuginnenraum spezifiziert worden ist, eine Kondensationsbestimmung, d. h. eine Bestimmung, ob ein Zustand existiert, in dem auf einer Innenfläche des Abteils Kondensation auftreten kann, durchzuführen; und

eine Bestimmungsergebnisausgabevorrichtung (270), um ein Bestimmungsergebnis, d. h. ein Ergebnis der Bestimmung durch den Kondensationsbestimmer (260), auszugeben; **dadurch gekennzeichnet, dass** der Kondensationsbestimmer (260) Folgendes umfasst:

einen Kondensationspunktberechner (261), um unter Verwendung der Feuchtigkeit im Fahrzeuginnenraum, die durch den Spezifizierer (210) für die Feuchtigkeit im Fahrzeuginnenraum spezifiziert worden ist, und der Fahrzeuginnentemperatur, die von dem Spezifizierer (220) für die Temperatur im Fahrzeuginnenraum spezifiziert worden ist, einen Kondensationspunkt der Fahrzeuginnenluft, d. h. der Luft im Innern des Abteils, zu berechnen;

einen Berechner (262) für die an der Innenfläche erreichbare Temperatur, um (i) unter Verwendung der Windgeschwindigkeit im Fahrzeuginnenraum, die von dem Spezifizierer (240) für die Windgeschwindigkeit im Fahrzeuginnenraum spezifiziert worden ist, einen thermischen Widerstand im Fahrzeuginnenraum, der einen thermischen Widerstand der Fahrzeuginnenluft darstellt und von der Windgeschwindigkeit im Fahrzeuginnenraum abhängig ist, derart zu berechnen, dass er mit einer Zunahme der Windgeschwindigkeit im Fahrzeuginnenraum abnimmt, (ii) unter Verwendung der Fahrzeuginnentemperatur, die von dem Spezifizierer (220) für die Temperatur im Fahrzeuginnenraum spezifiziert worden ist, und der Fahrzeugaußentemperatur, die von dem Spezifizierer (230) für die Temperatur an der Fahrzeugaußenseite spezifiziert worden ist, eine Temperaturdifferenz, d. h. eine Differenz zwischen der Fahrzeuginnentemperatur und der Fahrzeugaußentemperatur, zu berechnen, und (iii) unter Verwendung des thermischen Widerstands im Fahrzeuginnenraum und der Temperaturdifferenz eine an der Innenfläche erreichbare Temperatur, die eine an der Innenfläche des Abteils erreichbare Temperatur darstellt, zu berechnen; und

eine Vergleichsvorrichtung (263), um zu bestimmen, ob die an der Innenfläche erreichbare Temperatur, die von dem Berechner (262) für die an der Innenfläche erreichbare Temperatur berechnet worden ist, niedriger oder gleich dem Kondensationspunkt ist, der von dem Kondensationspunktberechner (261) berechnet worden ist.

2. Kondensationsdetektionsvorrichtung (200) für Fahrzeuge nach Anspruch 1, wobei der Spezifizierer (210) für die Feuchtigkeit im Fahrzeuginnenraum die Feuchtigkeit im Fahrzeuginnenraum basierend auf einem Fahrgastauslastungsfaktor für Fahrgäste, die in dem Abteil fahren, spezifiziert.

3. Klimaanlagenvorrichtung (400) für ein Fahrzeug, die Folgendes umfasst:

    die Kondensationsdetektionsvorrichtung (200) für Fahrzeuge nach Anspruch 1 oder 2; und
    die Klimaanlage (100) zum Klimatisieren des Abteils, wobei
    die Kondensationsdetektionsvorrichtung (200) für Fahrzeuge ferner Folgendes enthält:
    eine Steuereinrichtung (280), um (i) von der Bestimmungsergebnisausgabevorrichtung (270) eine Ausgabe des Bestimmungsergebnisses zu empfangen, das die Existenz des Zustands, in dem die Kondensation auf der Innenfläche des Abteils auftreten kann, anzeigt, und (ii) als Antwort auf die Ausgabe, die Klimaanlage (100) zu veranlassen, einen Kondensationsunterdrückungsbetrieb zum Unterdrücken des Auftretens vpn Kondensation zu beginnen.

4. Klimaanlagenvorrichtung (400) für ein Fahrzeug nach Anspruch 3, wobei

    die Klimaanlage (100) eine Entfeuchtungskapazität, d. h. eine Kapazität zum Verringern der Feuchtigkeit in dem Abteil, aufweist,
    die Entfeuchtungskapazität der Klimaanlage (100) variabel gesteuert werden kann, und
    der Beginn des Kondensationsunterdrückungsbetriebs eine Erhöhung der Entfeuchtungskapazität der Klimaanlage (100) veranlasst.

5. Klimaanlagenvorrichtung (400) für ein Fahrzeug nach Anspruch 3 oder 4, wobei

    die Klimaanlage (100) einen Innenraumventilator (121) enthält, um zu veranlassen, dass klimatisierte Luft in das Abteil strömt,
    eine Drehzahl des Innenraumventilators (121) variabel gesteuert werden kann, und
    der Beginn des Kondensationsunterdrückungsbetriebs eine Änderung in der Drehzahl des Innenraumventilators (121) veranlasst.

6. Klimaanlagenvorrichtung (400) für ein Fahrzeug nach einem der Ansprüche 3 bis 5, wobei

    die Klimaanlage (100) einen Umwälzventilator (130) enthält, um einen Luftstrom zu bilden, der sich von dem strömenden Luftstrom unterscheidet und die Luft in dem Abteil umwälzt, wobei der strömende Luftstrom die klimatisierte Luft ist, die in das Abteil strömt,
    eine Drehzahl des Umwälzventilators (130) variabel gesteuert werden kann, und
    der Beginn des Kondensationsunterdrückungsbetriebs eine Erhöhung der Drehzahl des Umwälzventilators (130) veranlasst.

7. Kondensationsdetektionsverfahren für Fahrzeuge unter Verwendung einer Kondensationsdetektionsvorrichtung (200) für Fahrzeuge nach Anspruch 1 oder 2, das Folgendes umfasst:

    einen Schritt (S1) des Spezifizierens einer Feuchtigkeit im Fahrzeuginnenraum des Spezifizierens einer Feuchtigkeit in einem Fahrzeuginnenraum, d. h. der Feuchtigkeit in einem Abteil eines Fahrzeugs;
    einen Schritt (S2) des Spezifizierens einer Temperatur im Fahrzeuginnenraum des Spezifizierens einer Temperatur in dem Fahrzeuginnenraum, d. h. einer Temperatur in dem Abteil;
    einen Schritt (S3) des Spezifizierens einer Temperatur an der Fahrzeugaußenseite des Spezifizierens einer Temperatur an der Fahrzeugaußenseite, d. h. einer Temperatur an der Außenseite des Fahrzeugs;
    einen Schritt (S4) des Spezifizierens einer Windgeschwindigkeit im Fahrzeuginnenraum des Spezifizierens einer Windgeschwindigkeit in dem Fahrzeuginnenraum, d. h. einer Windgeschwindigkeit des Luftstroms, der in dem Abteil durch eine Klimaanlage (100), die die Klimatisierung des Abteils durchführt, gebildet wird; und
    einen Schritt (S6-S8) des Durchführens einer Kondensationsbestimmung, d. h. einer Bestimmung, ob ein Zustand existiert, in dem Kondensation auf einer Innenfläche des Abteils auftreten kann, unter Verwendung der Werte der Feuchtigkeit im Fahrzeuginnenraum, die in dem Schritt (S1) des Spezifizierens einer Feuchtigkeit im Fahrzeuginnenraum spezifiziert worden sind, der Werte der Temperatur im Fahrzeuginnenraum, die in dem Schritt (S2) des Spezifizierens einer Temperatur im Fahrzeuginnenraum spezifiziert worden sind, der Werte der Temperatur an der Fahrzeugaußenseite, die in dem Schritt (S3) des Spezifizierens einer Temperatur an der Fahrzeugaußenseite spezifiziert worden sind, und der Werte der Windgeschwindigkeit im Fahrzeuginnenraum, die in dem Schritt (S4) des Spezifizierens einer Windgeschwindigkeit im Fahrzeuginnenraum spezifiziert worden sind.

## Revendications

**1.** Dispositif de détection de condensation de véhicule (200) comprenant :

un spécificateur d'humidité à l'intérieur du véhicule (210) pour spécifier l'humidité à l'intérieur du véhicule qui est l'humidité dans un compartiment d'un véhicule ;
un spécificateur de température à l'intérieur du véhicule (220) pour spécifier une température à l'intérieur du véhicule qui est une température dans le compartiment ;
un spécificateur de température à l'extérieur du véhicule (230) pour spécifier une température à l'extérieur du véhicule qui est une température à l'extérieur du véhicule ;
un spécificateur de vitesse du vent à l'intérieur du véhicule (240) pour spécifier une vitesse du vent à l'intérieur du véhicule qui est une vitesse du vent de flux d'air formé dans le compartiment par un climatiseur (100) pour la climatisation du compartiment ;
un déterminateur de condensation (260) pour réaliser, au moyen des valeurs de l'humidité à l'intérieur du véhicule spécifiées par le spécificateur d'humidité à l'intérieur du véhicule (210), la température à l'intérieur du véhicule spécifiée par le spécificateur de température à l'intérieur du véhicule (220), la température à l'extérieur du véhicule spécifiée par le spécificateur de température à l'extérieur du véhicule (230), et la vitesse du vent à l'intérieur du véhicule spécifiée par le spécificateur de vitesse du vent à l'intérieur du véhicule (240), une détermination de condensation qui est une détermination sur le fait qu'un état existe ou non dans lequel une condensation peut se produire sur une surface intérieure du compartiment ; et
un délivreur de résultat de détermination (270) pour délivrer un résultat de détermination qui est un résultat de la détermination par le déterminateur de condensation (260) ;
**caractérisé en ce que** le déterminateur de condensation (260) comporte :

un calculateur de point de rosée (261) pour calculer, au moyen de l'humidité à l'intérieur du véhicule spécifiée par le spécificateur d'humidité à l'intérieur du véhicule (210) et de la température à l'intérieur du véhicule spécifiée par le spécificateur de température à l'intérieur du véhicule (220), un point de rosée de l'air à l'intérieur du véhicule qui est l'air à l'intérieur du compartiment,
un calculateur de température pouvant être atteinte en surface intérieure (262) pour (i) calculer, au moyen de la vitesse du vent à l'intérieur du véhicule spécifiée par le spécificateur de vitesse du vent à l'intérieur du véhicule (240), une résistance thermique à l'intérieur du véhicule qui représente une résistance thermique de l'air à l'intérieur du véhicule et dépend de la vitesse du vent à l'intérieur du véhicule de manière à diminuer avec l'augmentation de la vitesse du vent à l'intérieur du véhicule, (ii) calculer, au moyen de la température à l'intérieur du véhicule spécifiée par le spécificateur de température à l'intérieur du véhicule (220) et de la température à l'extérieur du véhicule spécifiée par le spécificateur de température à l'extérieur du véhicule (230), une différence de température qui est une différence entre la température à l'intérieur du véhicule et la température à l'extérieur du véhicule, et (iii) calculer, au moyen de la résistance thermique à l'intérieur du véhicule et de la différence de température, une température pouvant être atteinte en surface intérieure représentant une température pouvant être atteinte sur la surface intérieure du compartiment ; et
un comparateur (263) pour déterminer si la température pouvant être atteinte en surface intérieure calculée par le calculateur de température pouvant être atteinte en surface intérieure (262) est inférieure ou égale au point de rosée calculé par le calculateur de point de rosée (261).

**2.** Dispositif de détection de condensation de véhicule (200) selon la revendication 1, dans lequel le spécificateur d'humidité à l'intérieur du véhicule (210) spécifie l'humidité à l'intérieur du véhicule sur la base d'un facteur de charge de passager pour les passagers montant dans le compartiment.

**3.** Appareil de climatisation de véhicule (400) comprenant :

le dispositif de détection de condensation de véhicule (200) selon la revendication 1 ou 2 ; et
le climatiseur (100) pour la climatisation du compartiment, dans lequel
le dispositif de détection de condensation de véhicule (200) comporte en outre :
un contrôleur (280) pour (i) recevoir du délivreur de résultat de détermination (270) la délivrance du résultat de détermination indiquant l'existence de l'état dans lequel la condensation peut se produire sur la surface intérieure du compartiment, et (ii) en réponse à la délivrance, amener le climatiseur (100) à démarrer une opération de suppression de condensation pour supprimer une occurrence de condensation.

4. Appareil de climatisation de véhicule (400) selon la revendication 3, dans lequel

le climatiseur (100) présente une capacité de déshumidification qui est une capacité pour diminuer l'humidité dans le compartiment, la capacité de déshumidification du climatiseur (100) est contrôlable de manière variable, et le début de l'opération de suppression de condensation provoque une augmentation de la capacité de déshumidification du climatiseur (100).

5. Appareil de climatisation de véhicule (400) selon la revendication 3 ou 4, dans lequel

le climatiseur (100) comporte un ventilateur intérieur (121) pour amener l'air climatisé à s'écouler à l'intérieur du compartiment, une vitesse de rotation du ventilateur intérieur (121) est contrôlable de manière variable, et le début de l'opération de suppression de condensation provoque le changement de la vitesse de rotation du ventilateur intérieur (121).

6. Appareil de climatisation de véhicule (400) selon l'une quelconque des revendications 3 à 5, dans lequel

le climatiseur (100) comporte un ventilateur d'agitation (130) pour former un flux d'air d'agitation qui est différent d'un flux d'air d'écoulement et agite l'air dans le compartiment, le flux d'air d'écoulement étant le flux d'air climatisé s'écoulant dans le compartiment, une vitesse de rotation du ventilateur d'agitation (130) est contrôlable de manière variable, et le début de l'opération de suppression de condensation provoque une augmentation de la vitesse de rotation du ventilateur d'agitation (130).

7. Méthode de détection de condensation de véhicule utilisant un dispositif de détection de condensation de véhicule (200) selon la revendication 1 ou 2, comprenant :

une étape de spécification d'humidité à l'intérieur du véhicule (S1) consistant à spécifier l'humidité à l'intérieur du véhicule qui est l'humidité dans un compartiment d'un véhicule ; une étape de spécification de température à l'intérieur du véhicule (S2) consistant à spécifier une température à l'intérieur du véhicule qui est une température dans le compartiment ; une étape de spécification de température à l'extérieur du véhicule (S3) consistant à spécifier une température à l'extérieur du véhicule qui est une température à l'extérieur du véhicule ; une étape de spécification de vitesse du vent à l'intérieur du véhicule (S4) consistant à spécifier une vitesse du vent à l'intérieur du véhicule qui est une vitesse du vent de flux d'air formé dans le compartiment par un climatiseur (100) pour la climatisation du compartiment ; et une étape de détermination de condensation (S6-S8) consistant à réaliser, au moyen des valeurs de l'humidité à l'intérieur du véhicule spécifiées dans l'étape de spécification d'humidité à l'intérieur du véhicule (S1), de la température à l'intérieur du véhicule spécifiée dans l'étape de spécification de température à l'intérieur du véhicule (S2), de la température à l'extérieur du véhicule spécifiée dans l'étape de spécification de température à l'extérieur du véhicule (S3), et de la vitesse du vent à l'intérieur du véhicule spécifiée dans l'étape de spécification de vitesse du vent à l'intérieur du véhicule (S4), une détermination de condensation qui est une détermination sur le fait qu'un état existe ou non dans lequel une condensation peut se produire sur une surface intérieure du compartiment.

# FIG. 1

# FIG. 2

# FIG. 3

200

260

CONDENSATION DETERMINER

210

VEHICLE-INSIDE
HUMIDITY
SPECIFIER

Hi

220

VEHICLE-INSIDE
TEMPERATURE
SPECIFIER

Ti

230

VEHICLE-OUTSIDE
TEMPERATURE
SPECIFIER

To

240

VEHICLE-INSIDE
WIND VELOCITY
SPECIFIER

Vi

250

VEHICLE-OUTSIDE
WIND VELOCITY
SPECIFIER

Vo

261

DEW-POINT
CALCULATOR

Td

262

INSIDE-
SURFACE
ATTAINABLE
TEMPERATURE
CALCULATOR

Ta

263

COMPARER

270

DETERMINATION
RESULT
OUTPUTTER

280

CONTROLLER

# FIG. 4

```
      ┌─────────────────────────┐
      │ CONDENSATION MONITOR    │
      │      PROCESSING         │
      └─────────────────────────┘
                  │
                  ▼
      ┌─────────────────────────┐
      │ SPECIFY VEHICLE-INSIDE  │─ S1
      │        HUMIDITY         │
      └─────────────────────────┘
                  │
                  ▼
      ┌─────────────────────────┐
      │  SPECIFY VEHICLE-INSIDE │─ S2
      │       TEMPERATURE       │
      └─────────────────────────┘
                  │
                  ▼
      ┌─────────────────────────┐
      │  SPECIFY VEHICLE-OUTSIDE│─ S3
      │       TEMPERATURE       │
      └─────────────────────────┘
                  │
                  ▼
      ┌─────────────────────────┐
      │  SPECIFY VEHICLE-INSIDE │─ S4
      │       WIND VELOCITY     │
      └─────────────────────────┘
                  │
                  ▼
      ┌─────────────────────────┐
      │  SPECIFY VEHICLE-OUTSIDE│─ S5
      │       WIND VELOCITY     │
      └─────────────────────────┘
                  │
                  ▼
      ┌─────────────────────────┐
      │    CALCULATE DEW POINT  │─ S6
      └─────────────────────────┘
                  │
                  ▼
      ┌─────────────────────────┐
      │  CALCULATE INSIDE-SURFACE│─ S7
      │  ATTAINABLE TEMPERATURE │
      └─────────────────────────┘
                  │
                  ▼
             S8 ╱╲
       INSIDE-SURFACE ATTAINABLE          NO
       TEMPERATURE ≤ DEW POINT? ──────────────────┐
                  │                                │
                 YES                               │
                  ▼                                ▼
            S9 ╱╲                             S11 ╱╲
    YES  CONDENSATION SUPPRESSION       CONDENSATION SUPPRESSION  NO
  ┌──── OPERATION IN PROGRESS?          OPERATION IN PROGRESS? ────┐
  │               │                              │                 │
  │              NO     S10                      YES    S12         │
  │               ▼                              ▼                  │
  │     ┌─────────────────────┐        ┌─────────────────────┐     │
  │     │       START         │        │        STOP         │     │
  │     │ CONDENSATION        │        │ CONDENSATION        │     │
  │     │ SUPPRESSION OPERATION│       │ SUPPRESSION OPERATION│    │
  │     └─────────────────────┘        └─────────────────────┘     │
  │               │                              │                 │
  └───────────────┼──────────────────────────────────────────────┘
                  ▼
            S13 ╱╲
       END CONDENSATION
  ┌─── MONITOR PROCESSING?
  │   NO          │
  │              YES
  │               ▼
  │      ┌─────────────────┐
  │      │       END       │
  │      └─────────────────┘
  │
  └──── (back to start)
```

# FIG. 5

# FIG. 6

940 (900)

| VEHICLE<br>LOCATION<br>SPECIFIER |

230

| VEHICLE-OUTSIDE<br>TEMPERATURE<br>SPECIFIER |

292 (200)

| CALENDAR<br>FUNCTION MEMBER |

# FIG. 7

950 (900)

| VEHICLE<br>VELOCITY<br>SPECIFIER |

250

| VEHICLE-OUTSIDE<br>WIND VELOCITY<br>SPECIFIER |

# FIG. 8

# FIG. 9

960 (900)

270 (200)

| DRIVER CAB MONITOR | ← | DETERMINATION RESULT OUTPUTTER |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01297318 B
- DE 102015113574 A1
- EP 1080955 A1
- DE 19540566 A1